# EUROPEAN PATENT APPLICATION

(11) **EP 4 032 703 A1**
(43) Date of publication of application: **27.07.2022**
(21) Application number: 21152714.8
(22) Date of filing: 21.01.2021
(51) Int. Cl.: B32B 27/32, C08L 23/16

(54) **THERMOPLASTIC ELASTOMERIC COMPOSITIONS COMPRISING POLYOLEFINS AND STYRENE B-ETHYLENE-ETHYLENE-PROPYLENE B-STYRENE BLOCK COPOLYMERS**

(71) Applicant: Kuraray Europe GmbH, 65795 Hattersheim (DE)
(72) Inventor: Gründken, Marcel, 65795 Hattersheim am Main (DE); Matsumoto, Akira, 65795 Hattersheim am Main (DE)
(74) Representative: Janßen, Christian Oliver

(57) **Abstract**

The present invention relates to thermoplastic elastomeric compositions comprising polyolefins, styrene-b-ethylene-ethylene-propylene-b-styrene block copolymers and optionally, a plasticizers, laminates comprising the same as well as their use in disposable hygiene and medical products.

## Description

The present invention relates to thermoplastic elastomeric compositions comprising polyolefins, styrene-b-ethylene-ethylene-propylene-b-styrene block copolymers and optionally, a plasticizer, laminates comprising the same as well as their use in disposable hygiene and medical products.

Disposable hygiene and medical articles often comprise a elastomeric composition, e.g. in form of a laminate used in the waistbands and elastic ears. Such elastomeric films must meet specific properties such as softness, elasticity, tensile strength, stress-relaxation, and desirable levels of tension at various levels of extension. Furthermore, the elastomer composition must be capable of high speed processing to enable efficient manufacturing of disposable hygiene articles. Also, the materials from which the compositions are made have to be low in price since the hygiene and medical products containing them are generally disposable.

International application WO2019/094667A1 describes the use of compositions comprising polyolefins and styrene-ethylene/butylene-styrene block copolymers. While these compositions have certain advantageous properties, there is still a need in the industry for improved compositions.

Thus, object of the present invention was the provision of thermoplastic elastomeric composition with improved softness, elasticity, tensile strength, stress-relaxation, and/or processibility. Additionally, these compositions provide advantageous process conditions in terms of time and/or cost when used to prepare laminates and films.

These and other problems have been solved by the present invention.

The present concerns a thermoplastic elastomer composition comprising
a. a styrene-ethylene-ethylene-propylene-styrene block copolymer (SEEPS),
b. a polyolefin elastomer, and
c. optionally, a plastiziser.

The term "thermoplastic" shall have its normal meaning, namely, a substance that can become plastic on heating and hardens on cooling through multiple cycles as would be understood by a person of ordinary skill in the relevant art.

The term "elastomer" also shall have its normal meaning, namely, a substance that has elastic prope1ties, as would be understood by a person of ordinary skill in the relevant art.

Suitable polyolefin elastomers include, for example, homopolypropylene, propylene/ethylene random copolymers, propylene/ethylene block copolymers, propylene/butane random copolymers, propylene/ethylene/butene block copolymers, propylene/pentene random copolymers, propylene/hexene random copolymers, propylene/octene random copolymers, propylene/ethylene/pentene random copolymers, propylelle/ethylene/hexene random copolymers, or mixtures thereof.

Preferably, the polyolefin elastomer according to the present invention comprises propylene and ethylene units. Suitable examples of commercial available polyolefin elastomers comprising propylene and ethylene units include those available under the VISTAMAXX^{®} brand from ExxonMobil Chemical, including but not limited to the following grades: 2330; 3000; 3020; 3980; 6102; 6202; and 6502; the QUEO^{™} brand from Borealis, including but not limited to the following grades: 0201, 0203, 0210, 8201 8203, 8210, 8230; as well as the INFUESE^{™} and ENGAGE^{™} brands from DOW Chemical.

Also preferably, the ethylene content in the polyolefin elastomer is higher than 5 wt%, more preferably higher than 10 wt%, most preferably higher than 15 wt% and specifically (around) 16 wt%.

It has been surprisingly found that compositions comprising SEEPS and polyolefins with a rather high viscosity, i.e. with a low melt index, lead to a specifically beneficial relationship of stress and strain.

Thus, the inventive composition preferably comprise a polyolefin elastomer with a melt index (190 ºC / 2.16 kg) as measured according to ASTM D1238 of less than 15 g/min, more preferably less than 9 g/10 min, more preferably less than 5 g/10 min, most preferably less than 2 g/10 min and specifically less than 1.5 g/10 min.

Also preferably, the thermoplastic elastomer composition comprises from 35 to 90 wt% polyolefin elastomer, more preferably from 50 to 85 wt%, more preferably from 55 to 75 wt%, and most preferably from 65 to 75 wt%.

Styrene-b-ethylene-ethylene-propylene-b-styrene block copolymer (SEEPS) according to the present invention are commercially available. Preferred examples thereof include Septon^{™} 4033, Septon^{™} 4055, Septon^{™} 4077, Septon^{™} 4099, Septon^{™} HG252 as well as mixtures thereof, and can be obtained from Kuraray Co., Ltd.

Preferably, the styrene-b-ethylene-ethylene-propylene-b-styrene block copolymer (SEEPS) has a styrene content from 20 to 40 wt%, more preferably from 25 to 35 wt% and most preferably from 28 to 32 wt%.

Also preferably, the styrene-b-ethylene-ethylene-propylene-b-styrene block copolymer (SEEPS) have a melt flow index (230°C, 2.16 kg) of less than 1.0 g/10 min, most preferably of less than 0.1 g/10 min.

Also preferably, the thermoplastic elastomer composition according to the invention comprises 5 to 55 wt% styrene-b-ethylene-ethylene-propylene-b-styrene block copolymer (SEEPS), more preferably 10 to 50 wt%, more preferably 15 to 35 wt%, and most preferably 15 to 25 wt%.

The inventive thermoplastic elastomer compositions advantageously comprise a plasticizer. Such plasticizers are known in the art and include, but are not limited to, a mineral oil such as paraffinic process oil and naphthenic process oil; a vegetable oil, such as rapeseed oil, peanut oil and rosin; a phosphoric acid ester; a low molecular weight polyethylene glycol; a liquid paraffin; a low molecular weight ethylene, ethylene-alpha-olefin copolymerized oligomer; a liquid polybutene; a liquid polyisoprene or its hydrogenated equivalent; a synthetic oil such as liquid polybutadiene or isoprene, or mixtures of the above.

The amount of plasticizer present in the inventive thermoplastic elastomer composition is preferably from 5 to 20 wt%, more preferably from 7 to 15 wt% and most preferably from 8 to 12 wt%.

The plasticizer may also include a synthetic hydrocarbon resin or tackifier, e.g. alpha-methylstyrene (AMS), terpene resins, polyterpenes, terpene phenol resins, rosin esters; aliphatic, cycloaliphatic or aromatic, C5, C9, hydrogenated or partly-hydrogenated resins or combinations thereof.

The inventive thermoplastic elastomer compounds may include one or more additives.

Suitable optional additives include conventional or commercially available additives. These additives can be used in any amount that is sufficient to obtain a desired processing or performance property for the thermoplastic elastomer compound and/or the elastomeric film formed therefrom. Suitable example include antioxidants and stabilizers; bonding agents; colorants such as pigments or dyes; impact modifiers; non-elastomeric thermoplastic polymer; tackifiers; ultraviolet light absorbers; waxes; attractants such as mosquito attractants or fly attractants; and mixtures thereof.

The inventive thermoplastic elastomer composition may also include one or more other components selected from the list comprising polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), thermoplastic elastomers (TPE), thermoplastic polyurethanes (TPU), polyethylenes (PE), polypropylenes (PP), ethylene vinyl alcohols (EVOH), polystyrene (PS), acrylonitrile styrene acrylate (ASA), polyacrylates, polyterpenes, polyphenols and polymethacrylates. Such components can be present, for example, to adjust processibility or other properties in the thermoplastic elastomer compound. Suitable non-elastomeric thermoplastic polymer should be compatible with the polyolefin elastomer blend and the SEEPS block copolymer. Such polyolefins are commercially available from a number of sources.

Also preferably, the inventive thermoplastic elastomer composition comprises less than 7 wt% of one or more thermoplastic polymers selected from the list consisting of polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), thermoplastic elastomers (TPE), thermoplastic polyurethanes (TPU), (homo)polyethylenes (PE), (homo)polypropylenes (PP), ethylene vinyl alcohols (EVOH), polystyrene (PS), acrylonitrile styrene acrylate (ASA), polyacrylates, polyterpenes, polyphenols, and polymethacrylates. The amount of less than 7 wt% shall mean that the combined amounts of such thermoplastic polymers present in the composition shall be below said 7 wt%. More preferably, the inventive thermoplastic elastomer composition comprises less than 7 wt% of one or more polystyrene and/or (homo)polypropylene polymers. More preferably, the inventive thermoplastic elastomer composition comprises less than 3 wt% of one or more polystyrene and/or (homo)polypropylene polymers. Most preferably, the thermoplastic elastomer composition comprises no polystyrene and/or no polypropylene homopolymers. "Comprises no polystyrene polymer" shall mean that no polystyrene polymer is intentionally added to the composition but may be present as impurity without altering the characteristics of the composition.

From the viewpoint of processibility, more preferably, the inventive thermoplastic elastomer composition comprises 5 wt% or more and less than 7 wt% of one or more polystyrene and/or (homo)polypropylene polymers. Most preferably, the thermoplastic elastomer composition comprises 5 wt% or more and less than 7 wt% of polypropylene homopolymers.

Also preferably, the inventive thermoplastic elastomer composition comprises less than 10 wt% of a hydrogenated block copolymer that is formed by hydrogenating a block copolymer having a polymer block (x) containing more than about 70% by mass of structural units derived from an aromatic vinyl compound (based on the total mass of polymer block (x)), and a polymer block (y) containing about 30% by mass or more of structural units derived from at least one kind selected from the group consisting of a conjugated diene compound and isobutylene (based on the total mass of polymer block (y)), and in the hydrogenated block copolymer, the total content of 3,4-bond units and 1,2-bond units in the polymer block (y) is 20 mol% or more, or about 40 mol% or more, or about 50 mol% or more. More preferably, the thermoplastic elastomer composition does not comprise such a hydrogenated block copolymer except in amount not affecting the characteristics of the composition.

The inventive thermoplastic elastomer composition may also include other styrene block copolymers, e.g. styrene-isoprene-styrene (SIS), styrene-butadiene-styrene (SBS), hydrogenated styrene-b-butadiene-b-styrene (SEBS) or hydrogenated styrene-b-isoprene-b-styrene (SEPS), including their derivative e.g. 1,2-vinyl rich isoprene and butadiene types, graft and star copolymers, alpha-methylstyrene type, di-block, tri-block, tetra-block or maleic anhydride or hydroxy functionalized.

Further aspects of the present invention concern a film comprising the thermoplastic elastomer composition as described above as well as a process for the production of such a film by extrusion, especially by co-extrusion, blown film extrusion or cast film extrusion.

Yet another aspect of the present invention concerns a laminate comprising the film as described before and a non-woven textile-like fabric based on polyamide (PA), polyethylene terephthalate (PET), polypropylene (PP), polyethylene (PE), cotton or a mixture thereof (e.g. bi-component nonwovens). A further aspect concerns the use of the films or the laminates in disposable hygiene and medical products including diapers, sanitary pads, face masks, covers, elastic patches and insect capturing sheets such as mosquito capturing sheets or fly capturing sheets.

Such laminates can be produced by any conventionally known technique, for example by co-extrusion, thermobonding, adhesive bonding or ultrasonic bonding. They may advantageously be activated before use, for example by stretching or using the ring roll technique.

The films or laminates can be used, for example, as pull tabs, side tabs, side panels, back ears, waistbands, laminate layers, chassis elements, and the like.

The following examples illustrate the invention.

### Examples

### Preparation of pre-mixes PM1 to PM4

Pre-mixtures for the film preparation were compounded on a corotating twin screw compounder available from Maris with a diameter of 58 mm, a Length-to-Diameter-ratio (LD) of 55, no screens. No melt pump was used. The materials were pre-blended on a highspeed batch type mixer, with app. 100 litter volume, inline of the compounding feeder. The compounding temperature was controlled from 20 °C (inlet) to 190 °C (die), app. 500 rpm screw speed, underwater cutting, use of antiblocking agents.

### Production of the films

Films were produced on a cast film extrusion line with the following setup: 3-layer co-extrusion with the configuration A/B/A (see below in table 1), screw dimensions of extruder A: diameter 45 mm, length 1440 mm, B: diameter 28 mm, length 840 mm. Die with width of 600 mm, T-die type. Temperature settings: 205 °C (extruder), 225-235 °C (feedblock and die), 4 °C (chill roll). Pull-up: approximately 10 m/min (variable). The film thickness was set to 60 µm and normalized to compare different recipes.

### Evaluation

The elastic properties of the films were evaluated. The 2nd cycle load point at 100% strain determines the force necessary to stretch the diaper closing system. The 2nd cycle unload stress point at 50% determines the remaining stress after stretching. Both parameter are associated with the holding force of the diaper closing system and provides an indication of the stable wear and comfort during wear.

Table 1 shows the recipes and the elastic properties according to the description above. The tear resistance was evaluated according to Elmendorf tear resistance measurement and qualitatively summarized. The processibility on the cast extrusion line was qualitatively summarized, taking typical known process problems into account that is known to reduce the process stability (temperature window, gels, neck-in, melt fracture).

The results in table 1 show that replacing the known SEBS block co-polymers with the inventive SEEPS block co-polymers leads to a surprising improvement in elastic properties and/or processibility while keeping a good level of tear resistance.

| | **C1** | **E2** | **E3** | **E4** |
|---|---|---|---|---|
| Layer A (both outer layers, each 5 µm) | 100% PP¹ | 100% PP¹ | 100% PP¹ | 100% PP¹ |
| Layer B (middle layer) | 60% POE² / 40% PM1 | 60% POE² / 40% PM2 | 60% POE² / 40% PM3 | 60% POE² / 40% PM4 |
| 2nd Cycle Load | 1.11 | 1.29 | 1.23 | 1.41 |
| 2nd Cycle Unload | 0.26 | 0.32 | 0.41 | 0.32 |
| Tear Resistance | Medium | Medium | Medium | Medium |
| Processibility | Moderate | Moderate | Moderate | Good |

| | | | | |
|---|---|---|---|---|
| Table 1, all % are wt% ¹) Polypropylene homopolymer, type 520P, manufacturer: Sabic ²) Polyolefin elastomer VISTAMAXX^{®} 6102, manufacturer: ExxonMobil | | | | |

The pre-mixtures were produced on a twin-screw compounder according the above description. The composition is as follows:
**PM1:** 74.5% SEBS (SEPTON^{™} 8004, manufacturer: Kuraray Co., Ltd.), 24.5% Processing Oil (Paraffinic, medical quality, type Oyster 261, manufacturer Petroyag), <1% Processing Aids (antioxidant, silica, talc)
**PM2:** 74.5% SEEPS (SEPTON^{™} 4033, manufacturer: Kuraray Co., Ltd.), 24.5% Processing Oil (Paraffinic, medical quality, type Oyster 261, manufacturer Petroyag), <1% Processing Aids (antioxidant, silica, talc)
**PM3:** 63.5% SEEPS (SEPTON^{™} 4033, manufacturer: Kuraray Co., Ltd.), 20.5% Processing Oil (Paraffinic, medical quality, type Oyster 261, manufacturer Petroyag), 15% polystyrene (GPPS, type PS3190, manufacturer: Styrolution), <1% Processing Aids (antioxidant, silica, talc)
**PM4:** 63.5% SEEPS (SEPTON^{™} 4033, manufacturer: Kuraray Co., Ltd.), 20.5% Processing Oil (Paraffinic, medical quality, type Oyster 261, manufacturer Petroyag), 15% polypropylene (polypropylene homopolymer, type 520P, manufacturer: Sabic), <1% Processing Aids (antioxidant, silica, talc)

## Claims

1. A thermoplastic elastomer composition comprising
a. a styrene-b-ethylene-ethylene-propylene-b-styrene block copolymer (SEEPS),
b. a polyolefin elastomer, and
c. optionally, a plastiziser.

2. The thermoplastic elastomer composition according to claim 1 wherein the polyolefin elastomer comprises propylene and ethylene units.

3. The thermoplastic elastomer composition according to claim 2 wherein the ethylene content in the polyolefin elastomer is higher than 15 wt%.

4. The thermoplastic elastomer composition according to any one of claims 1 to 3 wherein the polyolefin elastomer has a melt index (190 ºC / 2.16 kg) as measured according to ASTM D1238 of less than 9 g/10 min.

5. The thermoplastic elastomer composition according to claim 4 wherein the polyolefin elastomer has a melt index (190 ºC / 2.16 kg) as measured according to ASTM D1238 of less than 5 g/10 min.

6. The thermoplastic elastomer composition according to claim 5 wherein the polyolefin elastomer has a melt index (190 ºC / 2.16 kg) as measured according to ASTM D1238 of less than 2 g/10 min.

7. The thermoplastic elastomer composition according to any one of claims 1 to 6 comprising 50 to 85 wt% polyolefin elastomer.

8. The thermoplastic elastomer composition according to any one of claims 1 to 7 wherein the styrene-b-ethylene-ethylene-propylene-b-styrene block copolymer (SEEPS) is a tri block copolymer with from 28 to 32 wt% bound styrene hard block segments and a soft mid-block composed of hydrogenated butadiene and isoprene.

9. The thermoplastic elastomer composition according to any one of claims 1 to 8 wherein the thermoplastic elastomer composition comprises less than 10 wt% of a hydrogenated block copolymer that is formed by hydrogenating a block copolymer having a polymer block (x) containing more than about 70% by mass of structural units derived from an aromatic vinyl compound (based on the total mass of polymer block (x)), and a polymer block (y) containing about 30% by mass or more of structural units derived from at least one kind selected from the group consisting of a conjugated diene compound and isobutylene (based on the total mass of polymer block (y)), and in the hydrogenated block copolymer, the total content of 3,4-bond units and 1,2-bond units in the polymer block (y) is 50 mol% or more.

10. The thermoplastic elastomer composition according to any one of the claims 1 to 9 comprising less than 7 wt% of one or more thermoplastic polymers selected from the list consisting of polylactic acid (PLA), acrylonitrile-butadiene-styrene copolymer (ABS), polyamides (PA), polycarbonates (PC), polyethylene terephthalate (PET), polyethylene terephthalate copolymers (PETG), polyhydroxyalkanoates (PHA), thermoplastic elastomers (TPE), thermoplastic polyurethanes (TPU), (homo)polyethylenes (PE), (homo)polypropylenes (PP), ethylene vinyl alcohols (EVOH), polystyrene (PS), acrylonitrile styrene acrylate (ASA), polyacrylates, polyterpenes, polyphenols and polymethacrylates wherein the 7 wt% is the combined amount of said thermoplastic polymers.

11. The thermoplastic elastomer composition according to any one of the claims 1 to 10 wherein the thermoplastic elastomer composition comprises no polystyrene polymers and/or no polypropylene homopolymers.

12. The thermoplastic elastomer composition according to any one of the claims 1 to 10 wherein the thermoplastic elastomer composition comprises 5 wt% or more and less than 7 wt% of one or more polystyrene and/or polypropylene homopolymers.

13. A film comprising the thermoplastic elastomer composition according to any one of the claims 1 to 12.

14. A laminate comprising the film according to claim 12 and a non-woven textile-like fabric based on polyamide (PA), polyethylene terephthalate (PET), polypropylene (PP), polyethylene (PE), cotton or a mixture thereof.

15. Use of the film according to claim 13 or the laminate according to claim 14 in disposable hygiene and medical products including diapers, face masks, covers, elastic patches and insect capturing sheets.
